# EUROPÄISCHE PATENTANMELDUNG

(11) **EP 4 345 605 A1**
(43) Veröffentlichungstag der Anmeldung: **03.04.2024**
(21) Anmeldenummer: 22199084.9
(22) Anmeldetag: 30.09.2022
(51) Int. Cl.: G06F 8/65

(54) **VERFAHREN UND ANWENDUNG ZUM PARALLELEN ÜBERTRAGEN VON AUTOMATISIERUNGSPROGRAMMEN AUF EINE MEHRZAHL AUTOMATISIERUNGSKOMPONENTEN IN EINER INDUSTRIELLEN AUTOMATISIERUNGSANORDNUNG**

(71) Anmelder: Siemens Aktiengesellschaft, 80333 München (DE)
(72) Erfinder: Binkert, Tobias, 91336 Heroldsbach (DE); Nenntwich, Ivo, 91056 Erlangen (DE); Schulz, Alexander, 90768 Fürth (DE)
(74) Vertreter: Siemens Patent Attorneys

(57) **Zusammenfassung**

Die Erfindung betrifft ein Verfahren und eine Anwendung zum Übertragen von Automatisierungsprogrammen auf eine Mehrzahl Automatisierungskomponenten (T1, ..., Tn) einer industriellen Automatisierungsanordnung, wobei mittels eines Engineeringsystems (TIA) ein Projekt mit jeweils einem Automatisierungsprogramm für die Automatisierungskomponenten (T1, ..., Tn) erstellt, bearbeitet und/oder verwaltet wird. Dabei wird das Übertragen von mehreren Automatisierungsprogrammen von einer Anwendung (AW) zur Steuerung des Übertragens verwaltet, wobei durch die Anwendung (AW) für mehrere oder alle der zu programmierenden Automatisierungskomponenten (T1, ..., Tn) der Start einer separaten Instanz (MI, I2, ..., In) des Engineeringsystems (TIA) initiiert wird, wobei die Anwendung (AW) jeder dieser Instanzen (MI, I2, ..., In) einen jeweiligen Befehl zur Übertragung des jeweiligen Automatisierungsprogramms mit einer Spezifizierung des jeweiligen Automatisierungskomponente (T1, ..., Tn) erteilt, und wobei die Instanzen (MI, I2, ..., In) die jeweiligen Automatisierungsprogramme zu den jeweiligen Automatisierungskomponenten (T1, ..., Tn) im Wesentlichen zur gleichen Zeit übertragen. Damit wird in komplexen industriellen Automatisierungsanordnungen mit einer Vielzahl zu programmierenden Automatisierungskomponenten die für einen umfassenden Download der Automatisierungsprogramme benötigte Zeit erheblich verkürzt.

## Beschreibung

Die Erfindung betrifft ein Verfahren zum Übertragen von Automatisierungsprogrammen auf eine Mehrzahl Automatisierungskomponente gemäß dem Oberbegriff des Patentanspruchs 1, und eine Anwendung zum Übertragen von Automatisierungsprogrammen auf eine Mehrzahl Automatisierungskomponente gemäß dem Oberbegriff des Patentanspruchs 15.

In industriellen Automatisierungsanordnungen werden sogenannte Engineering Systeme für die Planung, Programmierung und Betriebssteuerung der Automatisierungskomponente, insbesondere von speicherprogrammierbaren Steuerungen, Antriebskomponenten und Bedien- und Beobachtungsgeräten, verwendet. Die Engineeringsysteme umfassen dabei verschiedene Hilfsmittel, beispielsweise Editoren zum Erstellen von Programmcode (Source Code), Hilfsmittel zur Gestaltung und Programmierung grafischer Benutzeroberflächen für die Bedien- und Beobachtungsgeräte (HMI-Geräte - HMI = Human Machine Interface), Planungsmittel für Daten- und Automatisierungsnetzwerke, Auswahlmittel für Hardware-Komponenten und dergleichen.

Die Engineeringsysteme sammeln alle Daten, die zu einer Automatisierungsanordnung gehören, in einer Projektdatei oder in einer Projektdatei-Struktur. Insbesondere sind in den Projektdateien die Automatisierungssoftware, also die Automatisierungsprogramme der speicherprogrammierbaren Steuerungen, Antriebe, HMI-Geräte, Netzwerkgeräte und anderer Automatisierungskomponenten gespeichert. Um eine Automatisierungsanordnung in Betrieb zu nehmen, werden die Engineeringsysteme dazu verwendet, die einzelnen Automatisierungskomponenten mit der jeweils erforderlichen Software, also den Automatisierungsprogrammen, zu versehen. Dieser Vorgang wird auch als "Download" oder manchmal auch als "Abfüllen" bezeichnet.

Ein Beispiel für ein solches integriertes Engineeringsystem ist das sogenannte TIA-Portal (TIA = "Totally Integrated Automation") des Herstellers SIEMENS als zentrales Engineering-Tool für SIEMENS-Steuerungen mit einem System (Step7) zur Erstellung von Automatisierungssoftware für speicherprogrammierbare Steuerungen (SPS, z.B. "SIMATIC"), HMIs (WINCC Advanced bzw. WINCC UNIFIED), Antriebe (SINAMICS) etc.

Die in den Automatisierungssystemen bekannter Hersteller verwendeten Engineeringsysteme haben die Eigenschaft, dass die in der "abzufüllenden" Automatisierungsanordnung vorhandenen Automatisierungskomponenten nacheinander mit den erforderlichen Automatisierungsprogrammen versorgt werden, d.h., dass zur gleichen Zeit immer nur eine Komponente oder Gerät mit Software versorgt wird. Das liegt an der internen Struktur der Engineeringsysteme, die in einem komplexen Projekt mit einer Vielzahl von Automatisierungskomponenten unterschiedlichster Art bei einem Download die zugrunde liegende Projektstruktur schrittweise abarbeiten, was dazu führt, dass ein entsprechender Vorgang in komplexen Umgebungen eine lange Zeit in Anspruch nimmt. Wegen ihrer Architektur sind diese Engineering Systeme nicht in der Lage, mehrere Automatisierungskomponenten gleichzeitig mit Software zu versorgen. Eine Änderung dieser bestehenden Engineeringsysteme, um diesen Nachteil zu beseitigen, würde einen tiefgreifenden Eingriff in die interne Struktur und Architektur dieser Systeme erfordern und wird deswegen seitens der Hersteller vermieden.

Auch das vorgenannte Beispiel des TIA-Portals besitzt in seiner jetzigen Fassung nur eine feste Schnittstelle um die Daten eines Projektes auf die einzelnen Elemente (Steuerungen, HMI, Antriebe) zu laden. Dieser sequenzielle Download der Daten benötigt vor allem bei Großprojekten mit vielen Antrieben / Elementen eine lange Zeit, in deren Verlauf effektiv nicht gearbeitet werden kann. Zusätzlich muss bei einem Massen-Download von Elementen wie Antrieben bei JEDEM Start eines Downloads über eine Maske das Ziel aus einer Liste ausgewählt werden, wodurch hier zusätzliche Benutzereingaben erforderlich sind und dies einen weiteren Zeitverlust darstellt, zumal der Benutzer somit den ganzen Download-Vorgang begleiten muss.

Es ist also eine Aufgabe der gegenständlichen Erfindung, den Vorgang der Übertragung von Automatisierungsprogrammen auf eine Mehrzahl Automatisierungskomponente in einer industriellen Automatisierungsanordnung bei den gebräuchlichen Engineeringssystemen zu beschleunigen.

Es ist eine Kernidee der erfindungsgemäßen Lösung dieser Aufgabe, sich zu Nutze zu machen, dass die gebräuchlichen Engineering Systeme nicht nur von einem (menschlichen) Benutzer bedient und gesteuert werden können, sondern auch über eine Schnittstelle verfügen, mit denen die Engineeringsysteme von anderen Programmen aufgerufen und zumindest teilweise gesteuert werden können. Solche Schnittstellen sind als Scripting-Schnittstelle bekannt; es sind jedoch auch Programmaufrufe mittels sogenannter Kommandozeilen-Parameter oder mittels einer API bekannt, mit denen die Engineeringsysteme gestartet (instanziiert) werden können und mit denen Befehle an die derart gestarteten Engineeringsysteme übermittelt werden können. Dabei ist es eine Kernidee der vorliegenden Erfindung, dass für jede zu programmierende Automatisierungskomponente oder für mehrere Gruppen solcher Automatisierungskomponenten jeweils automatisch eine Instanz eines Engineeringssystems erzeugt und gestartet wird, wobei diese Instanz automatisiert den Befehl ausführt, eine vorher spezifizierte Automatisierungskomponente oder eine Gruppe von Automatisierungskomponente mit vorher spezifizierten Automatisierungsprogrammen aus einem Projekt bzw. einer Projektdatei oder Projektdatei-Struktur zu programmieren. Je nach Anzahl der somit gestarteten Instanzen kann der Vorgang des Downloads bzw. des "abfüllens" parallelisiert werden, sodass sich die für die Programmierung eines Gesamtsystems erforderliche Zeit entsprechend verringert.

Die Lösung der Aufgabe sieht insbesondere ein Verfahren gemäß Patentanspruch 1 und eine Anwendung gemäß Patentanspruch 15 vor.

Dabei wird ein Verfahren zum Übertragen von Automatisierungsprogrammen auf eine Mehrzahl Automatisierungskomponenten einer industriellen Automatisierungsanordnung vorgeschlagen, wobei mittels eines Engineeringsystems ein Projekt mit jeweils einem Automatisierungsprogramm für die Automatisierungskomponenten erstellt, bearbeitet und/oder verwaltet wird, und wobei durch das Engineeringssystem während einer Programmierung der Automatisierungskomponenten zur gleichen Zeit jeweils eines der Automatisierungsprogramme zu einer der Automatisierungskomponenten übertragen wird. Dabei wird das Übertragen von mehreren Automatisierungsprogrammen von einer Anwendung zur Steuerung des Übertragens verwaltet, wobei durch die Anwendung für mehrere oder alle der zu programmierenden Automatisierungskomponenten der Start einer separaten Instanz des Engineeringsystems initiiert wird, wobei die Anwendung jeder dieser Instanzen einen jeweiligen Befehl zur Übertragung des jeweiligen Automatisierungsprogramms mit einer Spezifizierung der jeweiligen Automatisierungskomponente erteilt, und wobei die Instanzen die jeweiligen Automatisierungsprogramme zu den jeweiligen Automatisierungskomponenten im Wesentlichen zur gleichen Zeit übertragen. Damit wird in komplexen industriellen Automatisierungsanordnungen mit einer Vielzahl zu programmierenden Automatisierungskomponenten die für einen umfassenden Download der Automatisierungsprogramme benötigte Zeit erheblich verkürzt.

Die Aufgabe wird außerdem durch eine Anwendung zum Übertragen von Automatisierungsprogrammen auf eine Mehrzahl Automatisierungskomponenten einer industriellen Automatisierungsanordnung in dem zuvor beschriebenen Verfahren gelöst. Dabei ist die Anwendung mit einer Steuerungsfunktion zur Initiierung einer oder mehrerer Instanzen eines Engineeringsystems für jede zu programmierende Automatisierungskomponente ausgestattet, wobei die Steuerungsfunktion dazu eingerichtet ist, den Ablauf der Übertragung einzelner Steuerungsprogramme zu den einzelnen Automatisierungskomponenten mittels der Instanzen zu initiieren. Damit lassen sich die für das Verfahren erläuterten Vorteile erzielen.

Vorteilhafte Ausgestaltungen des erfindungsgemäßen Verfahrens sind in den abhängigen Patentansprüchen angegeben. Die dabei erläuterten Merkmale und deren Vorteile gelten sinngemäß auch für Ausgestaltungen der erfindungsgemäßen Anwendung. Die Ausgestaltungen können sowohl einzeln, als auch in Kombination miteinander realisiert werden.

In einer vorteilhaften Variante ist die Anwendung in einer ersten Instanz des Engineeringsystems integriert oder zumindest aus dieser heraus aufrufbar, so dass ein Benutzer des Engineeringsystems, also der Haupt- oder Master-Instanz, zur Initiierung des Download-Vorgangs bzw. Bedienung der Anwendung nicht den Arbeitskontext wechseln muss.

In einer Ausgestaltung berechnet die Anwendung anhand verfügbarer Ressourcen oder Lizenzen, wie viele gleichzeitige Instanzen des Engineeringsystems erzeugt und/oder betrieben werden können, und führt anhand dieser Informationen die Instanziierungen durch, wobei in den Fällen, in denen die Anzahl der möglichen gleichzeitigen Instanzen geringer ist als die Anzahl der zu programmierenden Automatisierungskomponenten, nach Vollendung eines ersten Programmiervorganges die betreffende Instanz erforderlichenfalls neu instanziiert und zur Programmierung einer der verbleibenden Automatisierungskomponenten verwendet wird. In einigen Fällen muss die freiwerdende Instanz nicht neu instanziiert, also geschlossen und neu erzeugt bzw. aufgerufen werden und kann vielmehr im geöffneten Zustand neu instruiert werden. Außerdem ist es in Varianten möglich, einer Instanz von vorneherein eine Reihe Arbeitsaufträge zuzuweisen, die dann sequenziell von dieser Instanz abgearbeitet werden. Das ist besonders dann möglich, wenn die Anwendung die jeweils benötigte Zeitdauer eines jeden Download-Vorgangs vorab abschätzen kann und entsprechend viele oder alle Vorgänge vorab planen kann. Dazu wird vorteilhaft bei der Berechnung der Umfang der jeweiligen Automatisierungsprogramme einbezogen, wobei der in Betracht gezogene Umfang nicht notwendigerweise auf die Datenmenge beschränkt ist, sondern auch andere Kriterien bezüglich der Komplexität und letztlich die erforderliche Zeit betreffen kann, beispielsweise die Geschwindigkeit der jeweiligen Datenübertragung, die Anzahl der bei einem Ladevorgang auszuführender Schritte, Erfordernisse für die Datensicherheit (z.B. Verschlüsselung und Authentifizierung etc.).

Eine Anwendung kann einfach und weitgehend generisch, also an verschieden Typen von Engineeringsystem anpassbar gestaltet werden, wenn die Anwendung die Instanzen des Engineeringsystems mittels einer Scripting-Schnittstelle oder mittels eines Satzes an Aufrufparametern oder mittels einer definierten Anwendungsschnittstelle (API) ansteuert. Viele existierende Engineeringsysteme unterstützen solche Methoden bereits und können somit unverändert verwendet werden.

Wenn die Programmierung einer Automatisierungskomponente aus mehreren Teilschritten besteht, übermittelt die Anwendung der jeweiligen Instanz vorteilhaft in einer zeitlichen Folge Befehle zur Durchführung der Teilschritte. Die Anwendung kann alternativ auch einen sequenziell strukturierten Arbeitsauftrag mit den Teilschritten, z.B. eine sog. Batch-Datei, an die betreffende Instanz übermitteln.

Zumindest eine der Instanzen kann in einem industriellen Edge-Gerät instanziiert werden, beispielsweise in Form einer containerisierten Form (z.B. als "Docker"-Container), wobei das Edge-Gerät mit einem Datennetzwerk der Automatisierungsanordnung verbunden ist. Edge-Geräte besitzen regelmäßig sowohl Datenverbindungen zu einer Automatisierungsebene, als auch zu externen Netzwerken, z.B. einer sog. "Cloud", und bieten Rechenkapazität im industriellen Umfeld.

In einer vorteilhaften Variante, die auch mit der zuvor gezeigten Ausführung einiger Instanzen auf einem Edge-Device parallel realisierbar ist, wird zumindest eine der Instanzen in einem Cloud-Dienst instanziiert, wobei der Cloud-Dienst mit einem Datennetzwerk der Automatisierungsanordnung verbunden ist. Cloud-Dienste bieten nahezu unbegrenzte Rechenkapazitäten und ermöglichen so eine gute Skalierbarkeit der aufgezeigten Lösung. Gleichermaßen kann in einer Variante die Anwendung in einer Cloud ablaufen und durch einen Bedien-Client, z.B. ein Gerät mit einem Webbrowser, bedient werden.

Ressourcen, z.B. Speicherplatz, werden eingespart und auch eine schnellere Instanziierung ist möglich, wenn für die Erzeugung einer Instanz des Engineeringsystems eine funktionsreduzierte Version des Engineeringsystems verwendet wird, die zumindest die zur Ausführung eines Übertragungsvorgangs erforderlichen Funktionen umfasst. Es kommen beispielsweise Varianten ohne Benutzeroberfläche und ohne Programm-Editoren in Frage. Sofern die Automatisierungsprogramme bereits in vorcompilierter Form vorliegen, können auch Instanzen ohne Compiler instanziiert werden, was nicht nur Ressourcen einspart, sondern auch Compiler-Lizenzen. Anderenfalls kann das Verfahren vorsehen, dass die Automatisierungsprogramme erst durch die Instanzen compiliert werden, was dann vorteilhaft sein kann, wenn zum Zeitpunkt der Erzeugung des Projekts der genaue Typ der Automatisierungskomponente ("Target") noch nicht bekannt ist und daher erst bei der Verteilung der Software typabhängig compiliert werden soll.

In einer Variante wird die Anwendung mittels einer graphischen Benutzeroberfläche zur Zuordnung der Automatisierungsprogramme zu den Automatisierungskomponenten konfiguriert, beispielsweise mit einer Web-basierten Oberfläche mittels eines externen oder mobilen Gerätes. In einer Alternative konfiguriert sich die Anwendung selbst anhand der Informationen aus den Projektdaten.

Ein schneller und blockierungsfreier Zugriff auf die Automatisierungsprogramme ist möglich, wenn für jede Instanz durch die Anwendung eine Kopie oder eine Teil-Kopie der Projektdatei oder Projektdateien mit dem jeweils zu verwendenden Automatisierungsprogramm erzeugt und der jeweiligen Instanz zugewiesen wird.

Vorteilhaft werden mittels der Instanzen weitere Funktionen des Engineeringsystems zeitlich parallelisiert, die entweder mittels eines singulären Systems nur sequenziell verfügbar sind, oder die viel Rechenleistung oder andere Ressourcen benötigen. Zum Beispiel umfassen die weiteren Funktionen eine Funktion zur Kontrolle eines Ablaufs des Automatisierungsprogramms einer jeweiligen Automatisierungskomponente, insbesondere für einen "Reset" der Automatisierungskomponente und/oder für einen Programmupload. Das ist besonders vorteilhaft, wenn die Automatisierungsanordnung standortübergreifend organisiert ist und die jeweiligen Instanzen lokal ablaufen. Nicht nur dabei kann vorteilhaft durch die Anwendung der Ablauf der Programmiervorgänge überwacht werden, wobei im Fehlerfall eine Fehlermeldung ausgegeben und/oder ein erneuter Programmiervorgang initiiert wird.

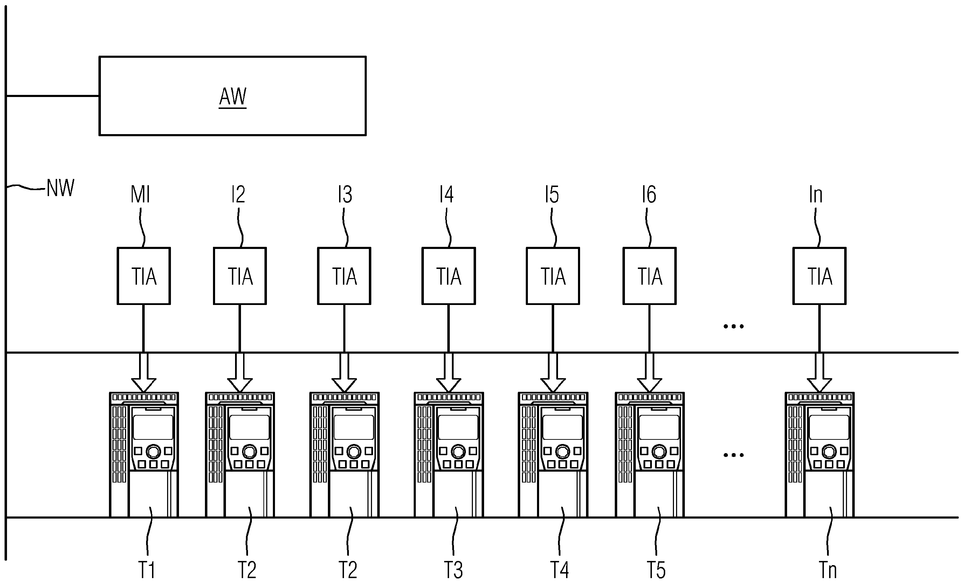

Ein Ausführungsbeispiel des erfindungsgemäßen Verfahrens wird nachfolgend anhand der Zeichnung beschrieben. Es zeigt gleichzeitig ein Beispiel der erfindungsgemäßen Anwendung.

Dabei zeigt die einzige Figur in schematischer Darstellung eine industrielle Automatisierungsanordnung mit sieben Automatisierungskomponenten, sieben Instanzen eines Engineeringssystems und einer Anwendung, die miteinander vernetzt sind.

In der Figur ist schematisch eine Automatisierungsanordnung mit einem Datennetzwerk NW dargestellt, beispielsweise ein LAN, ein Automatisierungsnetzwerk oder ein Feldbussystem, an dem die Anwendung AW mit verschiedenen Instanzen MI ("Master-Instanz"), I2, ..., In eines Engineeringssystems TIA (TIA = Totally Integrated Automation - Engineeringsystem des Herstellers Siemens) miteinander und mit den Automatisierungskomponenten T1, ..., Tn ("Target") vernetzt sind. Im vorliegenden Ausführungsbeispiel sind die Automatisierungskomponenten T1, ..., Tn programmierbare Antriebssteuerungen aus der SINAMICS-Familie der Siemens AG. In der Praxis können jedoch anstelle der hier gezeigten Struktur auch gemischte Architekturen höchst unterschiedlicher Automatisierungskomponenten zum Einsatz kommen, beispielsweise speicherprogrammierbare Steuerungen, HMI-Geräte, Fördersysteme, Roboter, Verfahrenstechnische Anlagenteile und andere.

Während die Anwendung AW in der Darstellung als eigenständige Anwendung auf einem separaten Gerät, beispielsweise einem Server oder einem Personal-Computer, dargestellt ist, kann in einer vorteilhaften Ausführungsform die Anwendung AW auch auf einem anderen Gerät, insbesondere einem der dargestellten Engineeringsysteme und dabei insbesondere auf der "Master-Instanz" MI, installiert sein, beispielsweise als sogenanntes Plug-In oder Add-In. Dabei ist die zuletzt erwähnte Master-Instanz MI in diesem Ausführungsbeispiel das für die eigentliche Projektierung verwendete Engineeringsystem, welches demzufolge auch mit einem Programm-Editor, einer grafischen Benutzeroberfläche, einem Compiler und allen anderen Funktionen eines gebräuchlichen Engineeringsystems ausgestattet ist. Im Gegensatz dazu können die anderen Instanzen I2, ..., In funktionsreduzierte Varianten darstellen, die aber zumindest die für die Parallelisierung verwendeten funktionalen Elemente, hier also ein Download-Modul zur Übertragung von Automatisierungsprogrammen, umfassen. In einer Ausführungsform, in der die Automatisierungskomponenten T1, ..., Tn nicht aus einer Produktfamilie oder gar von unterschiedlichen Herstellen stammen, können die verschiedenen Instanzen MI, I2, ..., In auch von unterschiedlichen, jeweils "passenden" Engineeringsystemen abgeleitet sein, für die die Anwendung AW dann auch erforderlichenfalls die passenden Steuerbefehle "kennt".

Die Lösung für einen effektiven Projekt-Download ist im gezeigten Beispiel die "Multi-parallel Download" genannte Funktion mittels eines Plug-Ins oder Add-Ins, hier für das TIA-Portal der Siemens AG. Dabei wird auf die im TIA-Portal integrierte Scripting-Schnittstelle "TIA Portal Openness" der Instanzen I2, ..., In zugegriffen; alternativ ist die Steuerung mittels Kommandozeilen- oder Aufruf-Parametern oder mittels einer API (Application Programming Interface) oder dgl. möglich. In diesem Beispiel ist die Anwendung also in der Master-Instanz MI integriert; alternativ ist, wie bereits erwähnt, der in der Figur gezeigte Betrieb "standalone" möglich.

Die Lösung sieht davon ausgehend vor, von einer TIA-Portal Haupt- oder Master-Instanz des Engineeringsystems (hier: Instanz MI) mehrere - von der verwendeten PC-Hardware unterstützte - neue TIA-Portal-Instanzen I2, ..., In - vorteilhaft ohne GUI (Graphical User Interface) - zu öffnen. Dabei wird das Projekt mehrfach zumindest teilweise kopiert und in jeweils einer TIA Portal Instanz MI, I2, ..., In geöffnet.

Die Anwendung AW kann mittels einer graphischen Benutzeroberfläche, z.B. mittels eines Web-Interfaces (integrierter Webserver), oder mittels einer Konfigurationsdatei oder dgl. mit den benötigten Informationen versorgt werden, insbesondere Adresse (z.B. IP-Adressen), Pfade oder Identifikation der jeweiligen "Targets" (Automatisierungskomponenten T1, ..., Tn) und der jeweils zu übertragenden Automatisierungsprogramme, Typinformation etc. Die Informationen können auch automatisch aus dem Projekt ausgelesen oder vom Engineeringsystem (Master-Instanz MI) erzeugt werden. Dazu können Regeln definiert werden, die beispielsweise die maximale Anzahl der Instanzen angeben, deren Ausführungsumgebung (lokal auf dem Personal-Computer, Server, Cloud, Edge-Device) spezifizieren, einen Verweis zu einem Lizenz-Server und dessen Zugangsdaten umfassen etc.

Das TIA Add-In (basierend auf dem API TIA Portal Openness) übernimmt nun die Steuerung und die Zuweisung der zu ladenden Elemente (hier Automatisierungsprogramme incl. etwaiger Konfigurationsdaten der SINAMICS Antriebe) auf die verschiedenen TIA Portal Instanzen und nutzt dabei die Download-Funktion der jeweiligen TIA-Portal-Instanz MI, I2, ..., In zur Übertragung der Automatisierungsprogramme auf die Automatisierungskomponenten T1, ..., Tn. In gleicher Weise können auch andere Befehle parallelisiert ausgeführt werden. Grundsätzlich ist es mit der gezeigten Erfindung nämlich möglich, alle Funktionen des TIA-Portals, welche über TIA Portal Openness Schnittstelle benutzt werden können, parallel zu nutzen und dabei mittels der TIA Portal Openness Funktionen anzuwählen und durch die Parallelisierung auszuführen.

Die Anbindung der Lizenzabfrage ist möglich, womit sichergestellt wird, dass das jeweils genutzte "Tool" nur unter dem Einsatz einer entsprechenden Lizenz arbeitet. Beispielsweise kann mit dem Verfahren die Compilierung von Programmcode der Automatisierungsprogramme in die Instanzen "ausgelagert" werden, wobei dann lokal jeweils eine Compiler-Lizenz zumindest temporär allokiert werden muss; dieser Vorgang der Lizensierung (und später der De-Lizensierung, also Freigabe der allokierten Lizenz) kann autonom von den Instanzen durchgeführt werden.

Insbesondere durch die Möglichkeit, sowohl die Instanzen als auch die Anwendung extern, insbesondere in einer "Cloud", zu installieren, ist es auch möglich, die geschilderten Funktionen (hier: multiparalleler Download) als Service anzubieten. Wie bereits erwähnt, ist die Anzahl der gleichzeitig betreibbaren TIA Portal Instanzen abhängig von der Leistungsfähigkeit der verwendeten Inbetriebnahme-Hardware (Laptop / PC / ...). Aufgrund der mittlerweile immer besser verfügbaren Internetanbindungen kann die Anwendung ggf. samt den Instanzen als externe Serveranwendung oder "in der Cloud" ablaufen. Dabei würde der Kunde sich die benötigte Rechenkraft auf einer von seitens des Herstellers des Engineeringsystems geführten Serverlandschaft mieten, sein Projekt dort hochladen und dann über die vom Server bereitgestellten TIA Portal Instanzen auf seine Maschine laden oder extern erzeugen lassen. Aufgrund der Skalierbarkeit von Servern ist eine noch größere Performance mit weitaus mehr Instanzen möglich, welche sich in einer erheblichen Zeitersparnis widerspiegelt.

Die bisherige Lösung eines sequenziellen Downloads von Komponenten aus dem TIA Portal kann also je nach Anzahl und Typ der Elemente (Automatisierungskomponenten und -programme) einen nicht unerheblichen Zeitaufwand für die Inbetriebnahme / Service einer Maschine / Anlage (Automatisierungsanordnung) bedeuten. Da ein wichtiges Merkmal die effiziente Ausnutzung von Zeit und Ressourcen ist, stellt der Parallel-Download eine logische Konsequenz zur Zeitoptimierung dar.

Der entscheidende Vorteil resultiert aus der programmierten Steuerung der TIA Portal Instanzen. Das TIA Add-In verwaltet eine gewisse Zahl an zusätzlichen TIA Portal Instanzen (ohne GUI) und nutzt des Weiteren Kopien des aktuellen Projektes, um weitere Elemente über die TIA Portal Download Funktion zu laden.

## Patentansprüche

1. Verfahren zum Übertragen von Automatisierungsprogrammen auf eine Mehrzahl Automatisierungskomponenten (T1, ..., Tn) einer industriellen Automatisierungsanordnung, wobei mittels eines Engineeringsystems (TIA) ein Projekt mit jeweils einem Automatisierungsprogramm für die Automatisierungskomponenten (T1, ..., Tn) erstellt, bearbeitet und/oder verwaltet wird,
wobei durch das Engineeringssystem (TIA) während einer Programmierung der Automatisierungskomponenten (T1, ..., Tn) zur gleichen Zeit jeweils eines der Automatisierungsprogramme zu einer der Automatisierungskomponenten (T1, ..., Tn) übertragen wird,
**dadurch gekennzeichnet,**
**dass** das Übertragen von mehreren Automatisierungsprogramme von einer Anwendung (AW) zur Steuerung des Übertragens verwaltet wird,
**dass** durch die Anwendung (AW) für mehrere oder alle der zu programmierenden Automatisierungskomponenten (T1, ..., Tn) der Start einer separaten Instanz (MI, I2, ..., In) des Engineeringsystems (TIA) initiiert wird,
wobei die Anwendung (AW) jeder dieser Instanzen (MI, I2, ..., In) einen jeweiligen Befehl zur Übertragung des jeweiligen Automatisierungsprogramms mit einer Spezifizierung des jeweiligen Automatisierungskomponente (T1, ..., Tn) erteilt, und
**dass** die Instanzen (MI, I2, ..., In) die jeweiligen Automatisierungsprogramme zu den jeweiligen Automatisierungskomponenten (T1, ..., Tn) im Wesentlichen zur gleichen Zeit übertragen.

2. Verfahren nach Patentanspruch 1,
**dadurch gekennzeichnet,**
**dass** die Anwendung (AW) in einer ersten Instanz (MI) des Engineeringsystems (TIA) integriert ist.

3. Verfahren nach einem der vorhergehenden Patentansprüche,
**dadurch gekennzeichnet,**
**dass** die Anwendung (AW) anhand verfügbarer Ressourcen oder Lizenzen berechnet, wie viele gleichzeitige Instanzen (MI, I2, ..., In) des Engineeringsystems (TIA) erzeugt und/oder betrieben werden können, und anhand dieser Informationen die Instanziierungen durchführt, wobei in den Fällen, in denen die Anzahl der möglichen gleichzeitigen Instanzen (MI, I2, ..., In) geringer ist als die Anzahl der zu programmierenden Automatisierungskomponenten (T1, ..., Tn), nach Vollendung eines ersten Programmiervorganges die betreffende Instanz (MI, I2, ..., In) erforderlichenfalls neu instanziiert wird und zur Programmierung einer der verbleibenden Automatisierungskomponenten (T1, ..., Tn) verwendet wird.

4. Verfahren nach Patentanspruch 3,
**dadurch gekennzeichnet,**
**dass** bei der Berechnung der Umfang der jeweiligen Automatisierungsprogramme (T1, ..., Tn) einbezogen wird.

5. Verfahren nach einem der vorhergehenden Patentansprüche,
**dadurch gekennzeichnet,**
**dass** die Anwendung (AW) die Instanzen (MI, I2, ..., In) des Engineeringsystems (TIA) mittels einer Scripting-Schnittstelle, mittels einer API, oder mittels eines Satzes an Aufrufparametern ansteuert.

6. Verfahren nach einem der vorhergehenden Patentansprüche,
**dadurch gekennzeichnet,**
**dass** die Programmierung einer Automatisierungskomponente (T1, ..., Tn) aus mehreren Teilschritten besteht, wobei die Anwendung (AW) der jeweiligen Instanz (MI, I2, ..., In) eine zeitliche Folge von Befehlen zur Durchführung der Teilschritte übermittelt.

7. Verfahren nach einem der vorhergehenden Patentansprüche,
**dadurch gekennzeichnet,**
**dass** zumindest eine der Instanzen (MI, I2, ..., In) in einem industriellen Edge-Gerät instanziiert wird, wobei das Edge-Gerät mit einem Datennetzwerk (NW) der Automatisierungsanordnung verbunden ist.

8. Verfahren nach einem der vorhergehenden Patentansprüche,
**dadurch gekennzeichnet,**
**dass** zumindest eine der Instanzen (MI, I2, ..., In) in einem Cloud-Dienst instanziiert wird, wobei der Cloud-Dienst mit einem Datennetzwerk (NW) der Automatisierungsanordnung verbunden ist.

9. Verfahren nach einem der vorhergehenden Patentansprüche,
**dadurch gekennzeichnet,**
**dass** für die Erzeugung einer Instanz (I2, ..., In) des Engineeringsystems (TIA) eine funktionsreduzierte Version des Engineeringsystems (TIA) verwendet wird, die zumindest die zur Ausführung eines Übertragungsvorgangs erforderlichen Funktionen umfasst.

10. Verfahren nach einem der vorhergehenden Patentansprüche,
**dadurch gekennzeichnet,**
**dass** die Anwendung (AW) mittels einer graphischen Benutzeroberfläche zur Zuordnung der Automatisierungsprogramme zu den Automatisierungskomponenten (T1, ..., Tn) konfiguriert wird.

11. Verfahren nach einem der vorhergehenden Patentansprüche,
**dadurch gekennzeichnet,**
**dass** für jede Instanz (MI, I2, ..., In) durch die Anwendung (AW) eine Kopie oder eine Teil-Kopie der Projektdatei oder Projektdateien mit dem jeweils zu verwendenden Automatisierungsprogramm erzeugt und der jeweiligen Instanz (MI, I2, ..., In) zugewiesen wird.

12. Verfahren nach einem der vorhergehenden Patentansprüche,
**dadurch gekennzeichnet,**
**dass** mittels der Instanzen (MI, I2, ..., In) weitere Funktionen des Engineeringsystems (TIA) zeitlich parallelisiert werden.

13. Verfahren nach Patentanspruch 12,
**dadurch gekennzeichnet,**
**dass** die weiteren Funktionen eine Funktion zur Kontrolle eines Ablaufs des Automatisierungsprogramms einer jeweiligen Automatisierungskomponente (T1, ..., Tn) umfasst, insbesondere für einen Reset der Automatisierungskomponente (T1, ..., Tn) und/oder für einen Programmstart .

14. Verfahren nach einem der vorhergehenden Patentansprüche,
**dadurch gekennzeichnet,**
**dass** durch die Anwendung (AW) der Ablauf der Programmiervorgänge überwacht wird, wobei im Fehlerfall eine Fehlermeldung ausgegeben und/oder ein erneuter Programmiervorgang initiiert wird.

15. Anwendung (AW) zum Übertragen von Automatisierungsprogrammen auf eine Mehrzahl Automatisierungskomponenten (T1, ..., Tn) einer industriellen Automatisierungsanordnung in einem der Verfahren nach Patentansprüche 1 bis 13,
**gekennzeichnet durch**
eine Steuerungsfunktion zur Initiierung einer oder mehrerer Instanzen (MI, I2, ..., In) eines Engineeringsystems (TIA) für einige oder jede zu programmierende Automatisierungskomponente (T1, ..., Tn) eingerichtet ist, wobei
die Steuerungsfunktion dazu eingerichtet ist, den Ablauf der Übertragung einzelner Steuerungsprogramme zu den einzelnen Automatisierungskomponenten (T1, ..., Tn) mittels der Instanzen (MI, I2, ..., In) zu initiieren.
